# EUROPEAN PATENT SPECIFICATION

(11) **EP 2 813 276 B1**
(45) Date of publication and mention of the grant of the patent: **23.08.2017**
(21) Application number: 13747173.6
(22) Date of filing: 23.01.2013
(51) Int. Cl.: B01D 53/00, F25J 3/02

(54) **GAS MIXTURE SEPARATION METHOD**
GASGEMISCHTRENNVERFAHREN
PROCÉDÉ DE SÉPARATION D'UN MÉLANGE DE GAZ

(30) Priority: 10.02.2012 RU 2012104716
(43) Date of publication of application: 17.12.2014
(73) Proprietor: Obschestvo S Ogranichennoi Otvetstvennostyu "Aerogaz", Moscow 115280 (RU); Imaev, Salavat Zainetdinovich, Moskovskaya obl.g. Ramenskoe 140101 (RU); Dmitriev, Leonard Markovich, Moskovskaya obl.g. Zhukovsky 140180 (RU)
(72) Inventor: IMAEV, Salavat Zainetdinovich, Moskovskaya obl. g. Ramenskoe 140101 (RU); DMITRIEV, Leonard Markovich, Moskovskaya obl. g. Zhukovsky 140180 (RU)
(74) Representative: Bucher, Ralf Christian
(86) International application number: PCT/RU2013/000049
(87) International publication number: WO 2013/119142

(56) References cited:
- RU-C1- 2 238 489
- RU-C1- 2 272 973
- RU-C2- 2 272 972
- US-A1- 2002 095 062
- US-A1- 2007 227 186
- US-A1- 2011 185 633
- US-B1- 6 560 989

## Description

### Field of the invention

The present invention relates to the technology of processing byproduct gas or natural gas and in particular to a process for low-temperature separating gas components.

### Background of the invention

It is known a process for separating a gas mixture disclosed in the patent EP 2326403, published on 05.12.2012, comprising the steps of cooling a gas mixture and expanding the mixture in a rotating flow, the mixture being separated into a product rich in targeted components and a product depleted of said components, pumping a part of products obtained from the gas mixture via a column, incorporating the depleted product into the outgoing gas.

However, such a process does not enable to provide a high degree of elimination of the targeted components since the dew point of the depleted flow remains rather high due to the difficulty to obtain low temperatures in the heat exchangers located upstream the inlet of a nozzle because of the component condensation in the heat exchangers.

A process of separation is also disclosed in the patent RU 2272973, published on 27.03.2006, comprising the steps of cooling a gas mixture, expanding the mixture in a spun flow in a nozzle, the mixture being separated into a product enriched with heavy components and a product depleted of said components, channeling at least a part of the enriched product into a fractionating column, channeling at least a part of gaseous products obtained in the fractionating column to the mixture before expanding the last, heating the depleted product at the expense of cooling the gas mixture.

Nevertheless, such a process does not enable either to provide a high purification degree due to the impossibility to obtain low temperatures in the heat exchangers.

US2007/227186A1 discloses a gas separation process with the features of the preamble of claim 1.

### Summary of the invention

The present invention is defined in claim 1. The dependent claims relate to further embodiments of the invention.

The technical result targeted by the present invention resides in the improvement of the degree of purifying the outgoing gas.

Said technical result is provided by the fact that in the process for separating a gas mixture comprising the steps of cooling the mixture, feeding the cooled mixture or a stream therefrom to a fractionating column, expanding at least a part of the column overhead product in a spun flow in a nozzle, the flow being separated into a flow enriched with components heavier than methane and a flow depleted of said components, heating the depleted flow at the expense of cooling the mixture, compressing the heated depleted gas flow in a compressor, according to the present invention, the heated and compressed depleted gas flow is cooled in an air cooling apparatus, a part of the compressed and cooled depleted gas flow is used as an exhaust gas or outgoing product, the other part is additionally cooled, expanded, and fed to the column and/or blended with the gaseous column overhead product upstream of the nozzle. Besides, the enriched flow or a part of the same is used as a cooling agent to cool the mixture, compressed, cooled with the air cooling apparatus and sent to the mixture.

Said technical result is provided as well by the fact that expanding the additionally cooled part of the gas can be carried out in a centrifugal expander or in a throttle valve and/or in a nozzle; some mixture and/or streams obtained from the mixture and having a temperature higher than the dew point of the enriched flow can be added to the enriched flow; likewise the additionally cooled part of the gas can be used in an ejector as ejecting or ejected gas after blending the same with products obtained from the gas mixture.

### Brief description of the drawings

The essence of the present invention is illustrated by the following drawings where:
Fig. 1 shows the general view of an installation for separating a gas mixture according to an embodiment of the invention,
Fig.2 shows a diagram of an ejector using ejecting or ejected gas while blending with products obtained from the gas mixture.

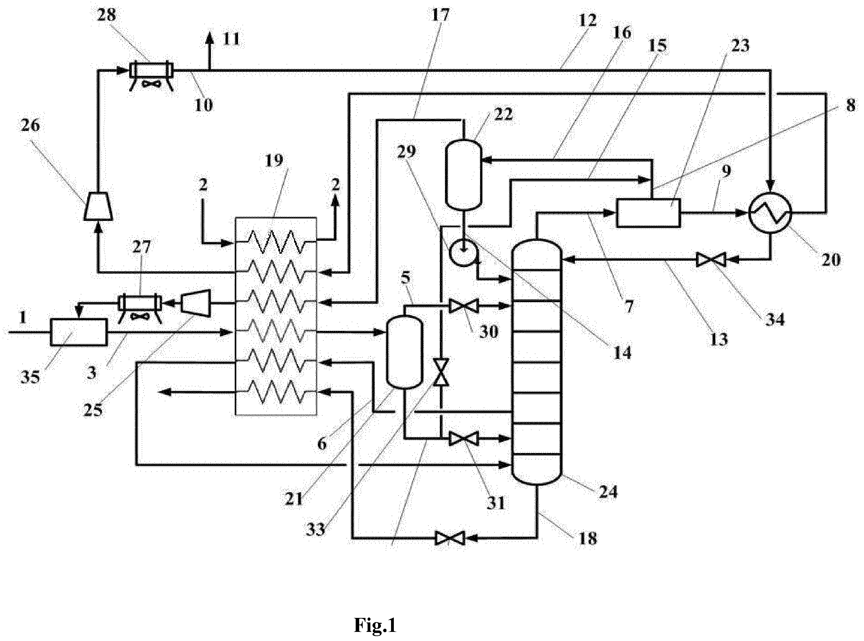

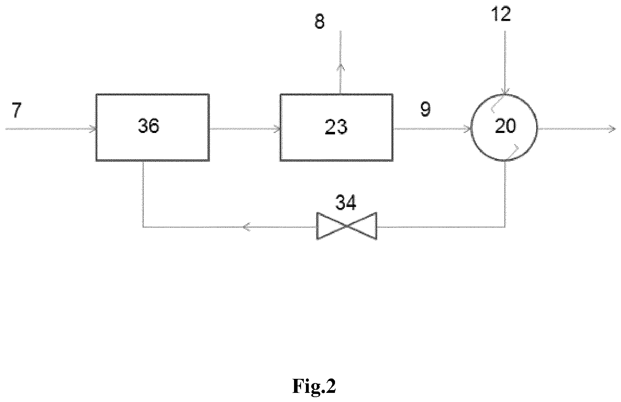

In Fig.1 and Fig.2, the following designations are adopted:
- 1: designates a raw gas or a gas mixture;
- 2: designates a cooling agent;
- 3-18: designate products obtained from the mixture;
- 19-20: designate heat exchangers;
- 21-22: designate separators;
- 23: designates a nozzle separator;
- 24: designates a fractionating column;
- 25-26: designate compressors;
- 27-28: designate air cooling apparatus;
- 29: designates a pump;
- 30-34: designate valves,
- 35: designates a blender;
- 36: designates an ejector.

### Embodiment of the invention

The mixture 1 enters the blender 35 where it is mixed with the gaseous product 17 obtained in the separator 22. In this case, the gas 17 is preheated in the compressor 25 and cooled in the air cooling apparatus 27. The mixture 3 is cooled in the heat exchanger 19, the two-phase mixture obtained in the separator 21 is separated into the gaseous product 5 and the liquid product that are expanded in the valves 30, 31 and sent to the column 24. The expanding of the gas 5 can be carried out in a centrifugal expander or in a nozzle. Instead of a multichannel heat exchanger 19, several heat exchangers can be used.

The gaseous product 7 is fed from the column to the jet separator 23 where it is expanded in a spun flow in the nozzle and separated into a flow 8 enriched with components heavier than methane and a flow 9 depleted of these components. The enriched flow 8 is fed to the separator 22 where the liquid 14 and the gaseous 17 products are separated, the liquid 14 being fed to the column 24 with the help of a pump 29. The depleted flow 9 is fed into the heating channels of a recuperative heat exchanger 20 and then additionally heated in the heat exchanger 19, compressed in a compressor 26 cooled in an air cooling apparatus 28, a part of gas obtained 10 is used as an outgoing product 11. The other part 12 is additionally cooled in the heat exchanger 20, expanded in a valve 34 and fed to the column 24.

The part 6 of the liquid product is used as a cooling agent in the heat exchanger 19. The other part 18 of the liquid product is as well fed, as a cooling agent, to the heat exchanger 19 and is used as an outgoing product.

If necessary, an additional cooling agent 2 can be used in the heat exchanger 19.

According to the claim 2, the gaseous product 17 coming from the separator 22 and being a part of the enriched flow 16 is used in the heat exchanger 19 to cool the gas mixture, compressed in the compressor 25, cooled in the air cooling apparatus 27 and fed to the blender 35.

According to the claim 3, instead of the throttle valve 34, a centrifugal expander and/or a nozzle can be used to expand the additional part of gas.

In the case of using a nozzle to obtain the depleted and enriched products in the same, these products can be fed to a column, on plates of different levels, which will favor a more efficient operation of the column.

According to the claim 4, some mixture and/or products obtained from the mixture and having a temperature higher than the dew point of the enriched flow can be added to the enriched flow 8. It will enable to avoid the formation of a solid phase (for example, of dry ice) in the conduits as well as in the separator 22.

According to the claim 5, the additional cooled part of gas after its expansion is fed to the ejector 36 (Fig. 2) where it is used as an ejecting or ejected gas while mixed with the products 7 obtained from the gas mixture, after that the mixture is sent to the nozzle separator 23.

The ejector 36 can be used either for lowering pressure in the fractionating column or for lowering energy used for compression.

Instead of the blender 35, an ejector can be used as well, which will enable a more rational use of energy to compress gas.

Table 1 discloses the data for calculating the parameters of flows in the installation shown as an example in Fig. 1.

The Table uses the designations as follows: No is the flow number, T is the flow temperature, P is the flow pressure, the values of the component molar fraction being given in respective lines.

As it results from the disclosed example, such an installation can be used for removing a considerable part of carbon dioxide from the mixture 1 where the initial content of the same achieves ∼70 %.

The calculations are made for the case when the separation of the flow 7 occurs after expanding the flow in the nozzle of the nozzle separator to the pressure of 1 MPA with subsequent restoring the diffuser pressure to 2.5 MPA.

**Table 1**

| No | | **1** | **3** | **7** | **9** | **11** | **15** | **16** | **18** |
|---|---|---|---|---|---|---|---|---|---|
| | | | | | | | | | |
| Mass part of gas | | 1.00 | 1.00 | 1.00 | 1.00 | 1.00 | 0.12 | 0.2 | 0.00 |
| Temperature | *C* | 30.00 | 27.54 | -60.35 | -50.88 | 30.00 | -61.89 | -64.32 | 5.00 |
| Pressure | *MPa* | 6.00 | 6.00 | 4.50 | 2.50 | 8.0 | 2.50 | 2.50 | 4.50 |
| Consumption | *kg*/*h* | 164139.47 | 181614.60 | 47164.07 | 28629.35 | 12628.61 | 70000.00 | 88534.72 | 141599.13 |
| Molar composition | | | | | | | | | |
| CO₂ | | 0.698789 | 0.611298 | 0.135609 | 0.038539 | 0.038531 | 0.612829 | 0.549182 | 0.854932 |
| CH₄ | | 0.199654 | 0.30102 | 0.850679 | 0.951227 | 0.951235 | 0.308918 | 0.387177 | 0.036058 |
| C₂H₆ | | 0.029948 | 0.027288 | 0.010989 | 0.009477 | 0.009476 | 0.027095 | 0.02385 | 0.03448 |
| C₃H₈ | | 0.029948 | 0.025493 | 0.002218 | 0.000724 | 0.000723 | 0.023974 | 0.019249 | 0.034534 |
| i-C₄H₁₀ | | 0.009983 | 0.008391 | 0.000258 | 0.000026 | 0.000026 | 0.007364 | 0.005661 | 0.010792 |
| n-C₄H₁₀ | | 0.009983 | 0.008369 | 0.000158 | 0.000007 | 0.000007 | 0.00707 | 0.005367 | 0.010397 |
| i-C₅H₁₂ | | 0.009983 | 0.00835 | 0.000055 | 0.000001 | 0.000001 | 0.006208 | 0.004642 | 0.009153 |
| n-C₅H₁₂ | | 0.009983 | 0.008346 | 0.000034 | 0 | 0 | 0.00587 | 0.004374 | 0.008661 |
| C₆+ and H₂O | | 0.001729 | 0.001445 | 0.000001 | 0 | 0 | 0.000672 | 0.000498 | 0.000992 |

## Claims

1. Process for separating a gas mixture (1) comprising the steps of
cooling the mixture (19),
feeding the cooled mixture (5) or a stream therefrom to a fractionating column (24),
expanding at least a part of the column overhead product (7) in a spun flow in a nozzle (23), the flow being separated into a flow (8) enriched with components heavier than methane and a flow (9) depleted of said components,
heating (19, 20) the depleted flow (9) at the expense of cooling the mixture, compressing the heated depleted gas flow in a compressor (26),
**characterized in that**
the heated and compressed depleted gas flow is cooled in an air cooling apparatus (28),
a part (10) of the compressed and cooled depleted gas flow is used as an outgoing product (11), the other part (12) is additionally cooled (20), expanded (34), and fed to the column (24) and/or blended with the gaseous column overhead product (7) upstream of the nozzle (23).

2. Process of claim 1, **characterized in that** the enriched flow or a part of the same is used as a cooling agent to cool the mixture, compressed, cooled with the air cooling apparatus and fed to the mixture.

3. Process of any claims 1, 2, **characterized in that** expanding the additionally cooled part of the gas is carried out in a centrifugal expander or in a throttle valve (34) and/or in a nozzle.

4. Process of claim 1, **characterized in that** some mixture and/or streams obtained from the mixture and having a temperature higher than the dew point of the enriched flow are added to the enriched flow (8).

5. Process of claim 1, **characterized in that** the additionally cooled part of the gas is fed to an ejector (36) where it is used as an ejecting or ejected gas while mixed with the column overhead product (7) obtained from the gas mixture.

## Patentansprüche

1. Verfahren zum Trennen eines Gasgemisches (1), umfassend die Schritte:
Abkühlen des Gemisches (19),
Zuführen des gekühlten Gemisches (5) oder eines Stroms davon zu einer Rektifikationskolonne (24), Expandieren zumindest eines Teils des Kolonnen-Kopfproduktes (7) in eine Wirbelströmung in einer Düse (23), wobei die Strömung in eine mit Komponenten schwerer als Methan angereicherte Strömung (8) und eine an diesen Komponenten abgereicherte Strömung (9) aufgeteilt ist,
Erhitzen (19, 20) der abgereicherten Strömung (9) zu Lasten des Abkühlens des Gemisches, Komprimieren des erhitzten abgereicherten Gasstroms in einem Kompressor (26),
**dadurch gekennzeichnet, dass**
der erwärmte und komprimierte abgereicherte Gasstrom in einer Luftkühlvorrichtung (28) gekühlt wird, ein Teil (10) des komprimierten und gekühlten abgereicherten Gasstroms als ausgehendes Produkt (11) verwendet wird, der andere Teil (12) zusätzlich gekühlt (20), expandiert (34) und der Kolonne (24) zugeführt wird und/oder mit dem gasförmigen Kolonnen-Kopfprodukt (7) stromaufwärts der Düse (23) gemischt wird.

2. Verfahren nach Anspruch 1, **dadurch gekennzeichnet, dass** die angereicherte Strömung oder ein Teil derselben als Kühlmittel zum Kühlen des Gemisches verwendet, komprimiert, mit der Luft-Kühlvorrichtung gekühlt und dem Gemisch zugeführt wird.

3. Verfahren nach einem der Ansprüche 1 bis 2, **dadurch gekennzeichnet, dass** das Expandieren des zusätzlich gekühlten Teils des Gases in einem Zentrifugalexpander oder in einem Drosselventil (34) und/oder in einer Düse erfolgt.

4. Verfahren nach Anspruch 1, **dadurch gekennzeichnet, dass** der angereicherten Strömung (8) etwas Gemisch und/oder aus dem Gemisch erhaltene Strömungen und mit einer Temperatur höher als der Taupunkt der angereicherten Strömung zugesetzt werden.

5. Verfahren nach Anspruch 1, **dadurch gekennzeichnet, dass** der zusätzlich gekühlte Teil des Gases einer Ausstoßvorrichtung (36) zugeführt wird, wo er als ausstoßendes oder ausgestoßenes Gas verwendet wird, während er mit dem aus dem Gasgemisch erhaltenen Kolonnen-Kopfprodukt (7) gemischt wird.

## Revendications

1. Procédé de séparation d'un mélange gazeux (1) comprenant les étapes consistant à:
refroidissement du mélange (19)
alimentant le mélange refroidi (5) ou un courant à partir de celui-ci vers une colonne de fractionnement (24), l'expansion d'au moins une partie du produit de tête de colonne (7) dans un flux de filage dans une buse (23), le flux étant séparé en un flux (8) enrichi en composants plus lourds que le méthane et en un flux (9) appauvrie en lesdits composants,
chauffage (19, 20) le flux appauvri (9) au détriment de refroidissement du mélange,
comprimant le flux de gaz appauvri chauffé dans un compresseur (26),
**caractérisé en ce que**
le flux de gaz appauvri chauffé et comprimé est refroidi dans un appareil de refroidissement par air (28), une partie (10) du flux de gaz appauvri comprimé et refroidi est utilisée comme produit sortant (11), l'autre partie (12) est en outre refroidie (20), expansée (34) et alimentée à la colonne (24) et / ou mélangé avec le produit de tête de colonne gazeuse (7) en amont de la buse (23).

2. Procédé selon la revendication 1, **caractérisé en ce que** le flux enrichi ou une partie de celui-ci est utilisé comme agent de refroidissement pour refroidir le mélange, comprimé, refroidi avec le un appareil de refroidissement par air et introduit dans le mélange.

3. Procédé selon l'une quelconque des revendications 1, 2, **caractérisé en ce que** l'expansion de la partie refroidie en supplément du gaz est effectuée dans un dispositif d'expansion centrifuge ou dans une soupape d'étranglement (34) et / ou dans une buse.

4. Procédé selon la revendication 1, **caractérisé en ce que** certains mélanges et / ou flux obtenus à partir du mélange et ayant une température supérieure au point de rosée du flux enrichi sont ajoutés au flux enrichi (8).

5. Procédé selon la revendication 1, **caractérisé en ce que** la partie refroidie en plus du gaz est amenée à un éjecteur (36) où elle est utilisée comme gaz d'éjection ou éjecté alors qu'elle est mélangée avec le produit de tête de colonne (7) obtenu à partir du mélange de gaz.
